# EUROPEAN PATENT APPLICATION

(11) **EP 3 878 762 A1**
(43) Date of publication of application: **15.09.2021**
(21) Application number: 20162318.8
(22) Date of filing: 11.03.2020
(51) Int. Cl.: B65D 5/24, B65D 5/56, B65D 5/66, B65D 65/46

(54) **CARDBOARD BOX AND METHOD FOR ASSEMBLING THE BOX**

(71) Applicant: OY Hango AB, 10900 Hanko (FI)
(72) Inventor: HOLMÉN, Patrik, 10900 Hanko (FI)
(74) Representative: Laine IP Oy

(57) **Abstract**

According to an example aspect of the present invention, there is provided a cardboard box comprising a bottom part (1) with a bottom (3) and four walls (4, 5, 6) extending from the bottom (3) and joined at corners to form a cavity and a top part (2) joined to an edge (11) of one of the walls (5). The cardboard box is made of heat sealable biodegradable barrier cardboard and each wall (4, 6) of the bottom part (19 not joined to the top part (2) comprises at the edge opposite the bottom (3) a double fold (7, 8) that is formed by folding the edge of the wall against the wall (4, 6) itself and heat sealing the double fold (7, 8) against the wall (4, 6)

## Description

### FIELD

The invention relates to packaging, especially packaging food stuffs like dairy products that may have a greasy or moist composition.

### BACKGROUND

The movement of new generations and decision makers into the professional marketplace has catalysed a shift in the way people behave and value. Tradition is becoming less prevalent as millennials take over the business and bring with them an increased desire to change, develop professionally, communicate on a more equal playing field and act ecologically. They value the planet. While older shoppers still read labels for information about calories and fat grams, millennials are more interested in how the food was sourced and grown and how that affects their carbon footprint. Sustainability is a priority for them when buying food at grocery stores or restaurants. Millennials' awareness of environmental issues has influenced food manufacturers to institute better earth-friendly practices. Food packaging is put to a completely new platform where environment friendly solutions are the driving force. Oil based solutions are not alternatives anymore. Millennials, more than other generations, favour packaging that stands out and makes their lives simpler, with designs that can be found easily when shopping and store well at home.

Packaging food stuffs presents several challenges. First of all materials used have to be safe and graded to be used as packaging food. Many foods are moist and greasy, whereby the packaging material must withstand long contact with such stuffs. For example, butter is packaged in alufoil coated paper, PE coated paper and plastic containers. These are all difficult to recycle and not biodegradable. Paper wrappers are also very untidy in use if the product is stored in an opened wrapper.

### SUMMARY OF THE INVENTION

The invention is defined by the features of the independent claims. Some specific embodiments are defined in the dependent claims.

According to a first aspect of the present invention, there is provided a cardboard box comprising a bottom part with a bottom and four walls extending from the bottom and joined at corners, and a top part joined to an edge of one of the walls. The cardboard box is made of heat sealable biodegradable barrier material and each wall of the bottom part not joined to the top part comprises at the edge opposite the bottom a double fold that is formed by folding the edge of the wall against the wall itself and heat sealing the double fold against the wall.

According to a second aspect of the present invention, there is provided a template for a cardboard box, comprising a bottom part with a bottom and four walls extending from the bottom and a top part joined to an edge of one of the walls of the top part along a creasing, a first double fold joined by a creasing to the opposite wall to the top part, a two second double fold joined to the walls extending between the wall joined to the top part and its opposite wall, the template being made of heat sealable biodegradable barrier material.

According to a third aspect of the invention there is provided a cardboard box comprising a triangle fold at each corner between the walls of the bottom part.

According to a fourth aspect of the invention there is provided a cardboard box wherein at least one of the double folds has an extension that is folded around the corner between two walls and under the double fold of the cornering wall.

According to a fifth aspect of the invention there is provided a cardboard box, wherein the top part comprises a lid and three walls extending from the lid, two of the walls are opposite to each other and each of the opposing walls comprise a locking flap at its edge.

According to a sixth aspect of the invention there is provided comprising creasing for triangle fold at each corner between the walls of the bottom part.

According to a seventh aspect of the invention there is provided a template wherein at least one of the double folds (7) has an extension (15).

According to an eight aspect of the invention there is provided template, wherein the top part comprises a lid and three walls extending from the lid, two of the walls are opposite to each other and each of the opposing walls comprise a locking flap at its edge.

According to a ninth aspect of the invention there is provided a method for producing a cardboard box, comprising:
- providing template according to at least some aspects of the invention;
- folding the template to a box; and
- seaming the box by heat sealing.

### BRIEF DESCRIPTION OF THE DRAWINGS

FIGURE 1 illustrates a template in accordance with at least some embodiments of the present invention;
FIGURE 2 illustrates a box formed of a template of FIGURE 1 in an opened position;
FIGURE 3 illustrates a box formed of a template of FIGURE 1 in a closed position;
FIGURE 4 illustrates a second template in accordance with at least some embodiments of the present invention;
FIGURE 5 illustrates a box formed of a template of FIGURE 4 in an opened position; and
FIGURE 6 illustrates a box formed of a template of FIGURE 4 in a closed position.

### EMBODIMENTS

### DEFINITIONS

In the present context, the term "biodegradable" refers to a material that maintains its mechanical strength during practical use but break down into low-weight compounds and non-toxic byproducts after their use.

Biodegradation is the breakdown of organic matter by microorganisms, such as bacteria and fungi.

This invention relates to a cardboard box that is especially but not exclusively intended for dairy products and other food stuffs. The package is made of biodegradable material using heat sealing. The form of the box provides sufficient rigidity so that the package maintains its form and shape during filling, storage, transport and use. The rigidity is obtained by double folds on at least some of the edges of the walls forming the cavity for the product.

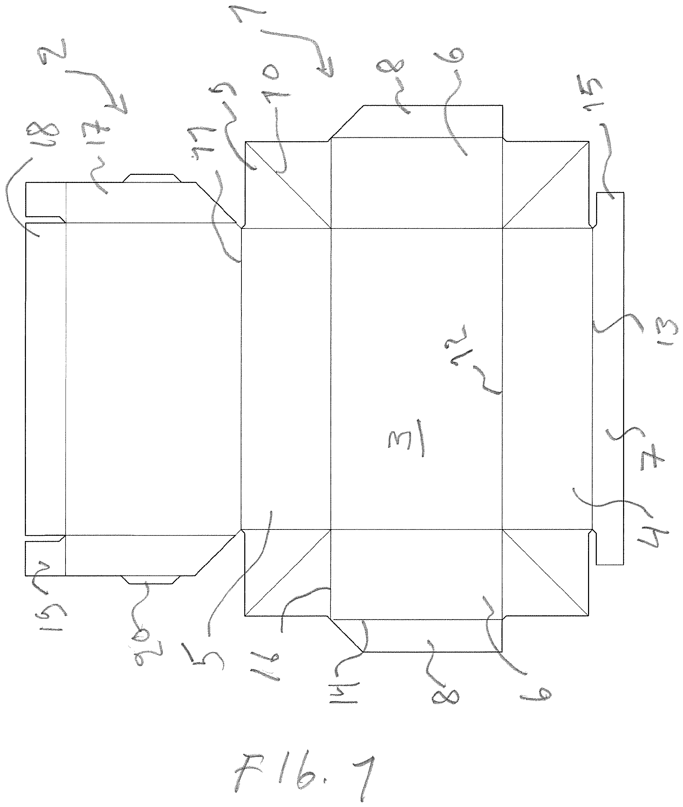

FIGURE 1 illustrates a template for a straight walled box in accordance with at least some embodiments of the present invention. The template comprises a bottom part 1 forming the cavity for the product to be packed. It includes a bottom 3, which is in this example quadrangular with two longer parallel sides and two shorter parallel sides. Each side of the bottom 3 is bordered by a creasing 12. The creasing around the bottom 3 joins the bottom 3 to back wall 5, front wall 4 and side walls 6 that extend away from the bottom 3. The edge of the front wall 4 has a first double fold 7 and a creasing of the first double fold 13 runs between the front wall 4 and the first double fold 7. The first double fold 7 has tabs 15 at its ends so that the first double fold 7 is longer than the front wall 4 is wide. Second double folds 8 are located at the edges of the side walls 6 and connected with the side walls with a creasing 14 of the second double folds. The side walls 6 are connected to the front wall 4 and respectively to the back wall 5 at the corners through triangle folds 9. These are formed of rectangles connected to the side and front resp. back wall through connecting creasings 16. A triangle fold creasing 10 from the corner between the walls to the distal corner of the rectangle dividing the rectangle in two triangles.

The top part 2 is joined to the back wall 5 along a creasing 11 between the top part 2 and the bottom part 1. The top part 2 forms a lid 22 or a cover for the cavity for the product. The top part 2 has side flaps 17 and a front flap 18. The side flaps 17 have extended second tabs 19. Further at the outer edges of the side flaps 17 are locking flaps 20.

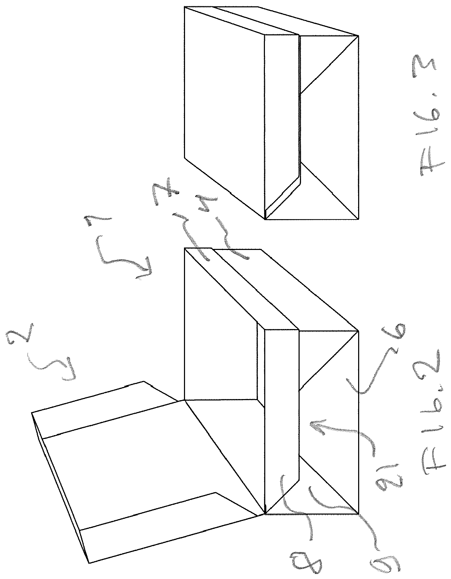

The template of FIGURE 1 is folded to a cardboard box shown in FIGURES 2 and 3. The folding is performed along the creasing lines described above. Some features related to folded box and obtained by the template described above, is now explained in more detail. The corners of the cardboard box are formed by folding edges of cornering walls 4, 5, 6 together. The triangle fold forms a flap extending outwards from the corner. This flap can be seen as part of the triangle fold 9 in FIGURES 2 and 3. This type of folding provides a way to form a liquid tight corner without holes or gaps. The double folds 7 and 8 are turned over the edge of respective wall 4, 6 and heat sealed on said wall. In this way the coating of the material at the edge of the wall is kept unbroken and barrier properties of the material maintained. The cut edges of the material are not exposed to the material to be packed, which prevents seepage of liquids or greases to the central layer of the material.

The double folds give structural strength to the cardboard box. The strength is further increased by tabs 15. The tabs are folded over the corners of the box and heat sealed to the side walls. In one preferred embodiment the tabs are sealed under the double folds 8 of the side walls 6, but it can be contemplated that the tabs are placed outside the side walls or that the tabs are made on the double folds 8 of the side walls 6.

As the triangle folds 9 are folded over the side walls 6 of the cardboard box, a gap is formed between the triangle folds 9. The double fold 8 of the side walls is folded over the triangle folds 9. In this way a groove 21 is formed between the side wall 6 and the double fold 8. The locking flap 20 can be turned into this groove 21 to lock the top part to a closed position.

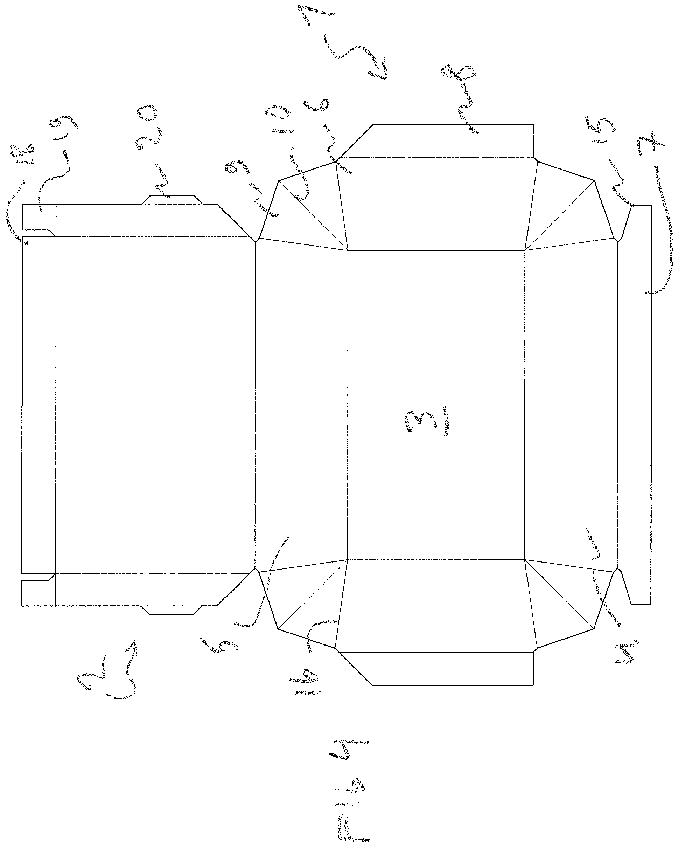

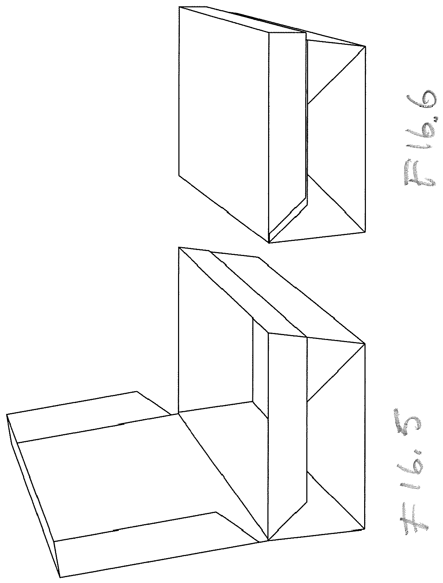

FIGURE 3 illustrates a slightly modified template capable of supporting at least some embodiments of the present invention. The template of FIGURE 1 forms a straight edged box a rectangular cuboid. The template of FIGURE 4 forms a trapezium package that can be stacked for transport as readily folded boxes. The difference between the templates and boxes of FIGURES 1 - 3 and 4 - 6 is that in template of FIGURE 4 the triangular folds are not rectangular but a sharp angle is formed between the side walls 6 and the front 4 and back wall 5. When the triangular fold is closed the upper edges are placed slightly wider apart than the lower edges and the trapezium form is obtained.

The material to be used in this package is biodegradable barrier cardboard. The material has to be also heat sealable. These are usually coated paperboards certified to be used for packaging food stuffs. One suitable material is available from STORAENSO by trade names Cupforma Natura BIO and Cupforma Natura BIO2. The material is bleached chlorine free cardboard that is coated on both sides with BIO coating. The material doesn't include fossil based plastic.

Forming and seaming the package is done by pressure and heat and no added glue is needed. The cardboard box can be manufactured in various shapes and sizes and provided with a window. The product can be delivered as flat templates or readily assembled stackable packages.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### INDUSTRIAL APPLICABILITY

The invention can be used in packaging industry for producing boxes for goods and materials.

### REFERENCE SIGNS LIST

- 1: Bottom part
- 2: top part
- 3: bottom
- 4: front wall
- 5: back wall
- 6: side wall
- 7: first double fold
- 8: second double fold
- 9: triangle fold
- 10: creasing of the triangle fold
- 11: creasing between top part and bottom part.
- 12: creasing around the bottom
- 13: creasing of the first double fold
- 14: creasing of the second double fold
- 15: tab
- 16: connecting creasing
- 17: side flap
- 18: front flap
- 19: second tabs
- 20: locking flap
- 21: gap
- 22: lid

## Claims

1. A cardboard box comprising:
- a bottom part (1) with a bottom (3) and four walls (4, 5, 6) extending from the bottom (3) and joined at corners to form a cavity, and
- a top part (2) joined to an edge (11) of one of the walls (5),
**characterized in that** the
- cardboard box is made of heat sealable biodegradable barrier cardboard, and
- each wall (4, 6) of the bottom part (19 not joined to the top part (2) comprises at the edge opposite the bottom (3) a double fold (7, 8) that is formed by folding the edge of the wall against the wall (4, 6) itself and heat sealing the double fold (7, 8) against the wall (4, 6).

2. A cardboard box according to the claim 1 comprising a triangle fold (9) at each corner between the walls (4, 5, 6) of the bottom part (1).

3. A cardboard box according to any of the claims 1 or 2, wherein at least one of the double folds (7) has an extension (15) that is folded around the corner between two walls (4, 6) and under the double fold (8) of the cornering wall (6).

4. A cardboard box according to any of the previous claims, wherein the top part (2) comprises a lid (22) and three walls (17, 18) extending from the lid (22), two of the walls (17) are opposite to each other and each of the opposing walls comprise a locking flap (20) at its edge.

5. A template for a cardboard box, comprising
- a bottom part (1) with a bottom (3) and four walls (4, 5, 6) extending from the bottom (3), and
- top part (2) joined to an edge of one of the walls of the top part (2) along a creasing (11),
a first double fold joined by a creasing to the opposite wall to the top part,
a two second double fold joined to the walls extending between the wall joined to the top part and its opposite wall, and
the template is made of heat sealable biodegradable barrier material.

6. A template according to the claim 5, comprising creasing for triangle fold (9) at each corner between the walls (4, 5, 6) of the bottom part (1).

7. A template according to one of the claims 5 - 6, wherein at least one of the double folds (7) has an extension (15).

8. A template according to any of the claims 5 - 7, wherein the top part (2) comprises a lid (22) and three walls (17, 18) extending from the lid (22), two of the walls (17) are opposite to each other and each of the opposing walls comprise a locking flap (20) at its edge.

9. A method for producing a cardboard box, comprising:
- providing template according to any of the claims 5 - 8;
- folding the template to a box; and
- seaming the box by heat sealing.
